# DEMANDE DE BREVET EUROPEEN

(11) **EP 0 712 612 A2**
(43) Date de publication de la demande: **22.05.1996**
(21) Numéro de dépôt: 95470036.5
(22) Date de dépôt: 26.10.1995
(51) Int. Cl.: A61C 5/02, A61C 3/03

(54) **Instrument endodontique adaptable sur une pièce à main vibrante**

(30) Priorité: 21.11.1994 FR 9414058
(71) Demandeur: MICRO MEGA INTERNATIONAL MANUFACTURES (Société Anonyme), F-25000 Besancon (FR)
(72) Inventeur: Badoz, Jean-Marie, F-25300 Pontarlier (FR); Calas, Paul, F-31400 Toulouse (FR); Vulcain, Jean-Marie, F-35500 Vitre (FR)
(74) Mandataire: Poupon, Michel

(57) **Abrégé**

L'invention concerne un instrument endodontique adaptable sur une pièce à main vibrante (1) pour le traitement d'un canal dentaire ou le retraitement de celui-ci, se composant d'une partie proximale rigide constituant le manche qui permet sa fixation à la pièce à main vibrante (1) d'une partie médiane elle aussi rigide (4) dont l'axe fait un angle (x) avec la partie proximale, et d'une partie distale (5) dont l'axe à l'extrémité fait un angle (y) avec la partie médiane en direction opposée à celle de la partie proximale, ladite partie distale étant de ligne générale conique et de dimension à la pointe permettant sa pénétration dans le canal.

## Description

La présente invention se rapporte au domaine des instruments dentaires endodontiques. Plus particulièrement, elle concerne un instrument ou famille d'instruments permettant l'élargissement du canal dentaire en vue de son traitement et de son obturation.

Il existe actuellement un grand nombre d'instruments endodontiques qui, avec les méthodes associées, permettent d'assurer une préparation canalaire, que ce soit manuellement ou mécaniquement, c'est-à-dire à l'aide d'une pièce à main supportant l'instrument endodontique.

Toutefois, le praticien, lors du traitement après ouverture de la chambre pulpaire, rencontre très souvent des difficultés pour localiser l'entrée canalaire, en particulier dans le cas de dents pluriradiculaires. En effet, l'extrémité des instruments canalaires destinés à s'engager profondément dans le canal est souvent trop flexible pour permettre de dégager l'entrée du canal. La solution couramment utilisée est de "gratter" le fond de la chambre pulpaire avec une curette manuelle, ce qui n'est pas aisé et ce d'autant qu'on parvient alors à faire apparaître l'entrée du canal sans créer un élargissement qui permettra une pénétration aisée de l'instrument ou des instruments destiné(s) à la préparation de la portion radiculaire du canal.

La présente invention a pour premier but de fournir un instrument qui, utilisé sur une pièce à main, lui imprimant une vibration, permet d'une part de dégager l'entrée canalaire et d'autre part d'en assurer un élargissement sur une faible distance, ne dépassant pas le tiers radiculaire supérieur.

Un autre but de l'invention est d'obtenir un agrandissement de l'entrée du canal de manière à offrir une pénétration aisée des instruments qui suivront.

Un autre but encore de l'invention est de réaliser un instrument qui permet d'atteindre les buts précédents tout en permettant d'éviter tout risque de perforation du plancher pulpaire ou des parois canalaires.

Tous ces buts sont atteints grâce à un instrument endodontique adaptable sur une pièce à main vibrante pour le traitement d'un canal dentaire ou le retraitement de celui-ci, caractérisé en ce qu'il se compose d'une partie proximale rigide constituant le manche qui permet sa fixation à la pièce à main vibrante d'une partie médiane elle aussi rigide dont l'axe fait un angle (x) avec la partie proximale, et d'une partie distale dont l'axe à l'extrémité fait un angle (y) avec la partie médiane en direction opposée à celle de la partie proximale, ladite partie distale étant de ligne générale conique et de dimension à la pointe permettant sa pénétration dans le canal.

De façon préférentielle, l'instrument selon l'invention se caractérise en ce que la géométrie de coupe de son extrémité distale est choisie dans l'ensemble (profil lime K, profil lime H, barbelures, profils polygonaux).

De façon également préférentielle, l'extrémité de la partie distale est arrondie.

Enfin, afin de permettre la reprise d'un traitement dentaire, la partie distale est longue et fine et coudée à environ 90° par rapport à la partie médiane.

On comprendra mieux la présente invention à l'aide de la description qui suit, faite en référence aux figures annexées suivantes :
- la **Figure 1** représente une vue d'une pièce à main vibrante de l'art antérieur pourvue d'un instrument en vibration,
- la **Figure 2** représente une vue d'un instrument selon la présente invention,
- la **Figure 3** représente un instrument selon l'invention monté sur une pièce à main, décrivant le mouvement de vibration de la pointe,
- la **Figure 4** représente un mode de réalisation non limitatif de l'invention,
- la **Figure 5** représente une variante de réalisation de la figure 4,
- les **Figures 6 et 7** sont des exemples non limitatifs de profils de l'invention réalisés au niveau de coupe AA de la figure 5,
- la **Figure 8** montre, vue en coupe, la reprise du traitement sur une dent.

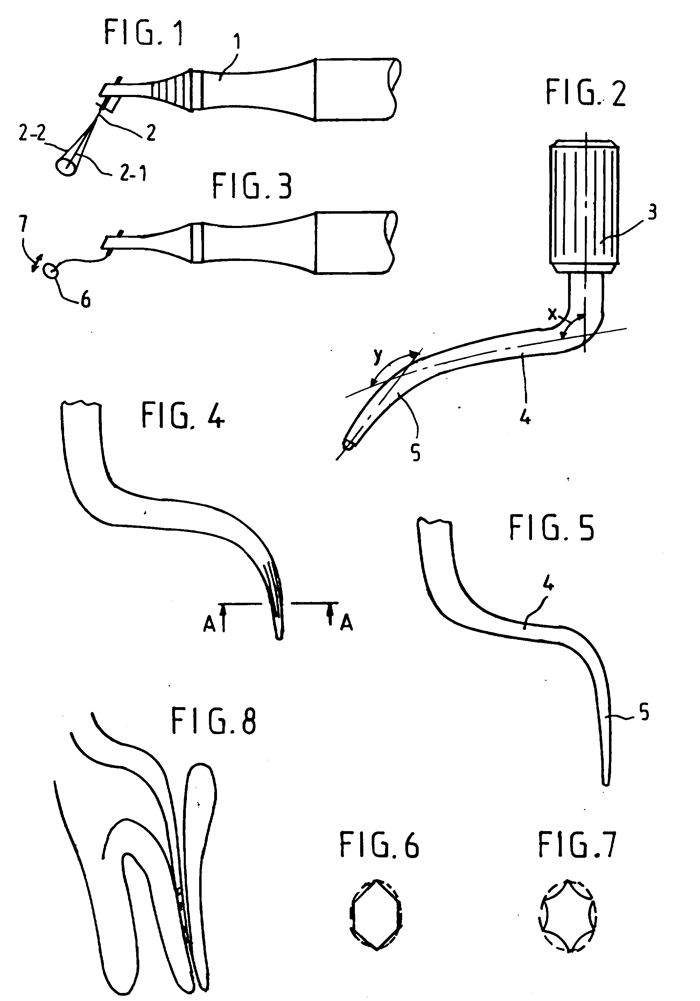

La figure 1 montre une pièce à main (1) pourvue d'un instrument canalaire (2) de type connu, par exemple celui décrit dans le brevet FR 2 575 950. En position repos, l'instrument se trouve dans la position 2-1. Lorsqu'il est excité, il se déforme suivant l'enveloppe 2-2. Ce type de mouvement est obtenu grâce à la souplesse de l'instrument.

La figure 2 montre un mode de réalisation non limitatif de l'instrument selon la présente invention, qui se compose d'une partie proximale rigide ou d'un manche (3) pourvu préférablement de stries qui permettent sa tenue dans la tête d'une pièce à main (1), et dont le diamètre sera réalisé en fonction des contraintes de fixation sur la pièce à main, d'une partie médiane (4) faisant un angle (x) avec l'axe du manche et une partie distale (5) dont l'axe à l'extrémité fait un angle (y) avec la partie médiane en direction opposée à celle de la partie proximale. L'ensemble de ces parties étant rigide, de telle sorte que les vibrations provenant de la pièce à main se traduisent par les mouvements représentés à la figure 3, c'est-à-dire sans ou presque qu'il n'y ait de déformation élastique de l'instrument. C'est-à-dire que la pointe de l'instrument se déplace suivant une courbe (6), représentée ici ovale mais qui est en fait dépendante de la pièce à main ou plutôt de son mode d'excitation, en combinaison avec un mouvement de va-et-vient (7).

On comprend aisément l'avantage de la géométrie de cet instrument qui, quel que soit le mode d'excitation en vibration du manche par la pièce à main (1) (excitation générale multidirectionnelle) crée à la pointe de l'instrument une vibration similaire à celle donnée à un instrument droit, à laquelle s'ajoute une vibration longitudinale de la partie distale. De telle sorte que, l'instrument étant excité en vibration, il suffit au praticien de le déplacer sur le plancher pulpaire pour que d'une part il décolle par "piochage" les matières obturant l'entrée canalaire et que, lorsqu'il se trouve en face de celle-ci, il y plonge, assurant sa localisation.

Pour permettre l'élargissement canalaire sur une faible longueur, on pourra pourvoir l'instrument de formes de coupe dans sa partie distale, qui peuvent être soit des profils connus du type lime K ou H ou des barbelures ou encore des profils polygonaux sans hélice, comme ceux des figures 6 et 7 par exemple.

La partie distale étant pourvue d'une géométrie de coupe, en le maintenant en place pendant un court instant alors qu'il a pénétré dans le canal, on obtiendra un agrandissement de l'entrée du canal, résolvant ainsi les interférences majeures, de manière à offrir une pénétration aisée des instruments qui suivront.

En outre, l'instrument selon la présente invention présente une pointe arrondie à l'extrémité distale, qui permet d'éviter tout risque de perforation du plancher pulpaire ou des parois canalaires.

Par ailleurs, l'invention permet de résoudre un autre problème important des soins dentaires, qui concerne la reprise de traitement canalaire. En effet, il arrive qu'après un premier traitement d'un canal, pour des raisons diverses, de récidive par exemple, il y ait lieu de traiter de nouveau ce canal. Il est alors nécessaire que le praticien extirpe du canal le ou les matériaux d'obturation précédemment placés dans le canal, qui peuvent être de natures diverses.

Dans ce cas, le praticien ne dispose pas de l'orifice naturel du canal pour introduire l'instrument.

Dans une version dérivée de l'instrument, grâce à son mouvement de bas en haut, on pourra permettre la réalisation d'un avant-trou qui permettra ensuite de poursuivre le traitement selon les méthodes habituelles.

Cette version de l'instrument, représentée à la figure 5, présente une partie distale (5) plus longue et plus fine et coudée à environ 90° par rapport à la partie médiane (4). La figure 8 montre l'utilisation de cette variante pour la reprise d'un traitement dans une dent.

L'invention peut s'appliquer à tout type de pièce à main, on peut aussi dériver cet instrument pour les traitement à rétro du type décrit dans le brevet US 5,320,530.

Les avantages principaux de l'instrument selon l'invention sont principalement :
- de faciliter la mise en évidence de l'entrée canalaire,
- de supprimer des risques de fausses routes qui se traduisent par des perforations du plancher pulpaire ou des parois canalaires,
- de permettre un écrasement de l'entrée canalaire facilitant la pénétration des instruments de préparation par suppression des contraintes dentinaires,
- d'améliorer la rapidité de traitement.

## Revendications

1. Instrument endodontique adaptable sur une pièce à main vibrante (1) pour le traitement d'un canal dentaire ou le retraitement de celui-ci, caractérisé en ce qu'il se compose d'une partie proximale rigide constituant le manche qui permet sa fixation à la pièce à main vibrante (1) d'une partie médiane elle aussi rigide (4) dont l'axe fait un angle (x) avec la partie proximale, et d'une partie distale (5) dont l'axe à l'extrémité fait un angle (y) avec la partie médiane en direction opposée à celle de la partie proximale, ladite partie distale étant de ligne générale conique et de dimension à la pointe permettant sa pénétration dans le canal.

2. Instrument selon la revendication 1, caractérisé en ce que la géométrie de coupe de son extrémité distale (5) est choisie dans l'ensemble (profil lime K, profil lime H, barbelures, profils polygonaux).

3. Instrument selon l'une des revendications 1 et 2 caractérisé en ce que l'extrémité de la partie distale est arrondie.

4. Instrument selon l'une des revendications 1 à 3, caractérisé en ce que la partie distale (5) est longue et fine et coudée à environ 90° par rapport à la partie médiane (4).
